(19) Europäisches Patentamt
European Patent Office
Office européen des brevets

(11) **EP 2 175 599 A1**

(12) **DEMANDE DE BREVET EUROPEEN**

(43) Date de publication:
**14.04.2010 Bulletin 2010/15**

(51) Int Cl.:
***H04L 27/26*** *(2006.01)*

(21) Numéro de dépôt: **09172717.2**

(22) Date de dépôt: **09.10.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **09.10.2008 FR 0856847**

(71) Demandeur: **FRANCE TELECOM**
**75015 Paris (FR)**

(72) Inventeurs:
• **Avril, Gautier**
**27230, Saint Aubin De Scellon (FR)**
• **Pagani, Pascal**
**22200, Guingamp (FR)**

(54) **Procédé d'annulation de bruits impulsifs**

(57) La présente invention se rapporte à un procédé (1) et à un dispositif d' d'annulation de bruits impulsifs détectés dans un signal multi porteuse de communication reçu. Les porteuses sont réparties sur une bande B dont une sous bande Bn ne contient pas de données utiles. Le procédé effectue :
- une sélection (3) d'une forme de référence parmi différentes formes de référence de bruits impulsifs selon une mesure de distance avec le signal reçu effectuée sur une bande Bn,
- une soustraction (4) dans le domaine fréquentiel, sur la bande B, de la forme de référence sélectionnée, corrigée d'un décalage temporel ($\Delta t$) estimé entre la forme de référence sélectionnée et le signal reçu, du signal fréquentiel reçu.

Fig. 2

**Description**

La présente invention se rapporte au domaine des télécommunications. Au sein de ce domaine, l'invention se rapporte plus particulièrement aux communications dites numériques de signaux à porteuses multiples.

Les communications numériques comprennent en particulier les communications filaires. La transmission de la communication est effectuée par un canal de transmission appelé parfois canal de propagation qui relie un émetteur et un récepteur. Le canal de transmission correspond à la liaison physique entre l'émetteur et le récepteur. Cette liaison est définie par certains paramètres et notamment par la nature de la liaison (filaire, radio,...). Certains équipements intermédiaires tels que des coupleurs ou des répéteurs sont considérés comme faisant partie du canal de transmission. En effet, ces équipements participent uniquement à la transmission du signal physique et sont transparents du point de vue des émetteurs et des récepteurs.

La transmission peut être perturbée par des bruits et notamment des bruits impulsifs, générés par exemple par des commutations ou des perturbations atmosphériques.

L'invention s'applique plus particulièrement à une transmission par courant porteur en ligne, communément désignée par les sigles CPL ou PLT (Power Line Transmission). Selon cette application, les bruits impulsifs sont souvent générés par des équipements électriques tels que des lampes électriques de basse consommation ou des chargeurs pour terminaux mobiles qui comprennent des hacheurs à l'origine de ces bruits.

L'invention n'est cependant pas limitée à ce type de transmission par courant porteur et peut trouver application à d'autres types de transmission filaire ainsi qu'à des transmissions non filaires, en particulier par voie aérienne.

Les bruits impulsifs parasitent considérablement le signal reçu, donc la qualité de la transmission. Pour lutter contre ces bruits, il est connu d'employer des procédés de correction ou de renvoi des données erronées. L'efficacité de ces procédés est améliorée en détectant la présence de bruit impulsif. En effet, une fois un bruit impulsif détecté sur un signal reçu, il est possible d'abandonner ou de corriger ce signal, ou encore de l'identifier comme porteur de données erronées, en vue de donner moins de poids à ces données lors d'un processus de décodage.

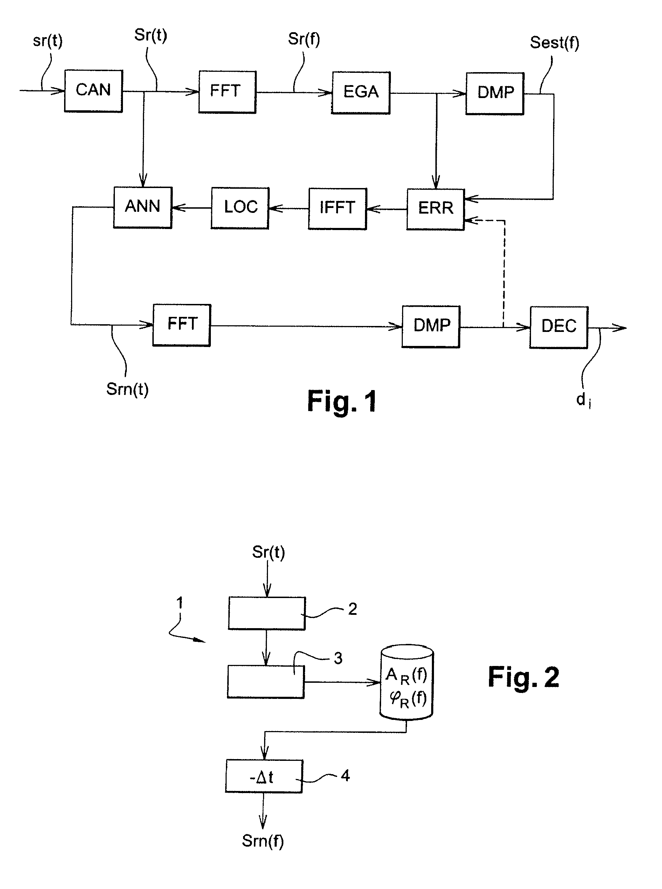

Une technique de correction est décrit dans l'article de Matsuo H., Umehara D., Kawai M., Morihiro Y. "An Iterative Detection for OFDM over Impulsive Noise Channel." International Symposium on Powerline Communications and Its Applications (ISPLC). 2002, pp. 213-217 et est illustrée par la figure 1. Le récepteur OFDM comprend un démodulateur FFT, un égaliseur de canal EGA, un module de demapping DMP, un module de calcul d'erreur ERR, un module de transformée de Fourier inverse IFFT, un module de localisation de l'impulsion de bruit LOC, un module d'annulation ANN.

Le signal temporel reçu Sr(t) est démodulé par le démodulateur FFT en effectuant une transformée de Fourier pour obtenir le signal fréquentiel Sr(f) composés de symboles. Le signal fréquentiel Sr(f) est corrigé des distorsions introduites par le canal de propagation au moyen de l'égaliseur EGA, typiquement en divisant le signal fréquentiel par la fonction de transfert du canal. Le module de demapping DMP permet d'obtenir le signal estimé en reconstituant les symboles complexes correspondant aux points de la constellation utilisée à l'émission, à partir du signal égalisé. Le module de calcul d'erreur ERR effectue la différence entre le signal égalisé et le signal estimé pour déterminer un signal d'erreur dans le domaine fréquentiel. Le signal d'erreur est transformé en un signal temporel par le module de transformation IFFT. Le module de localisation LOC estime la position de l'impulsion en détectant par exemple le dépassement d'un seuil par le signal temporel d'erreur. Ce module LOC estime en outre la durée de l'impulsion de bruit en détectant le retour en-dessous du seuil. Connaissant la position de l'impulsion et la durée, le module d'annulation ANN met à zéro les données d'information contenues dans le symbole reçu, sur la durée de l'impulsion du bruit impulsif détecté. Le symbole temporel nettoyé Srn(t) du bruit impulsif est de nouveau transformé en un symbole fréquentiel, typiquement par un démodulateur FFT en effectuant une transformée de Fourier, puis de nouveau traité par un module de demapping DMP pour une nouvelle estimation du symbole complexe. Cette dernière estimation est éventuellement réinjectée en entrée du module d'erreur pour un traitement itératif. A la fin des itérations, le symbole complexe estimé est classiquement décodé par un module décodeur DEC pour retrouver les données sources émises.

Cette technique d'annulation de bruits impulsifs part du principe que la perturbation dans le domaine temporel peut être estimée lorsque le nombre de symboles erronés est nettement inférieur au nombre de symboles correctement estimés. Ceci est particulièrement vrai pour la localisation d'une impulsion car sa densité spectrale de puissance est répartie sur l'ensemble des porteuses.

Toutefois, cette technique a pour inconvénient majeur d'être complexe puisqu'elle nécessite d'effectuer un calcul de transformée de Fourier inverse (IFFT) du signal d'erreur et un nouveau calcul de transformée de Fourier FFT du symbole après mises à zéro du signal temporel bruité. La complexité est un élément dimensionnant pour le choix d'une chaîne de réception puisqu'elle est associée à un nombre d'opérations et d'accès mémoire à effectuer dans un temps donné. Plus ce nombre est important et plus la mise en oeuvre par un composant matériel va être coûteuse en terme de consommation électrique, en terme de capacités du processeur de calcul et donc de coûts. La consommation électrique est sans doute un problème majeur des équipements de télécommunication en particulier dans un environnement de communications multimédia pendant lesquelles des données de différents types tels voix, data, son, vidéo, etc, peuvent être échangées.

L'invention se propose d'améliorer l'efficacité des techniques d'annulation de bruits impulsifs.

A cette fin, l'invention a pour objet un procédé d'annulation de bruits impulsifs détectés dans un signal multi porteuse de communication reçu par un récepteur, les porteuses étant réparties sur une bande B dont une sous bande Bn ne contient pas de données utiles. Le procédé comprend :

- une transformation du signal reçu échantillonné, du domaine temporel au domaine fréquentiel, en amplitude et en phase sur la bande B, par paquet d'échantillons de durée $T_s$ formant un symbole,
- une sélection d'une forme de référence parmi différentes formes de référence de bruits impulsifs selon une mesure de distance avec le signal reçu effectuée sur une bande Bn,
- une soustraction dans le domaine fréquentiel, sur la bande B, de la forme de référence sélectionnée, corrigée d'un décalage temporel estimé entre la forme de référence sélectionnée et le signal reçu, du signal reçu.

En outre, l'invention a pour objet un dispositif récepteur d'un signal multi porteuse, les porteuses étant réparties sur une bande B dont une sous bande Bn ne contient pas de données utiles, le signal émis étant transmis par un canal de transmission séparant un émetteur du récepteur, comprenant :

- un module de transformation du signal reçu dans le domaine fréquentiel, en amplitude et en phase sur la bande B, par paquet d'échantillons de durée $T_s$ formant un symbole,

et adapté en ce qu'il comprend :

- un module de sélection d'une forme de référence parmi différentes formes de référence de bruits impulsifs, selon une mesure de distance avec le signal reçu effectuée sur une bande Bn,
- un module de soustraction dans le domaine fréquentiel, sur la bande B, de la forme de référence sélectionnée, corrigée d'un décalage temporel estimé entre la forme de référence sélectionnée et le signal reçu, du signal reçu.

Les contraintes de réglementation liées au domaine des télécommunications définissent des porteuses qui ne doivent pas être utilisées pour la transmission du signal de communication émis à destination du récepteur. Lors de la transmission par un canal de propagation qui sépare l'émetteur du signal multiporteuse émis, du récepteur, le signal transmis peut être perturbé par des bruits impulsifs. Le procédé sélectionne une forme de référence de bruit, parmi différentes formes de référence, estimée comme la plus proche du signal reçu, selon une mesure de distance effectuée entre le signal reçu et les différentes formes de référence, sur la bande Bn. La bande Bn est la bande des porteuses qui ne doivent pas être utilisées pour émettre des données utiles. Cette bande Bn est classiquement discontinue et comprend des sous bandes. Néanmoins, elle peut être continue. Généralement, les porteuses de la bande Bn sont mises à zéro à l'émission, c'est-à-dire qu'elles sont modulées avec une donnée nulle. Cette forme sélectionnée est ensuite soustraite du signal reçu dans le domaine fréquentiel après avoir été positionnée en temps en fonction de l'instant où le signal reçu est perturbé. Le signal reçu "nettoyé" de la perturbation peut ensuite être utilisé directement par les modules suivant un démodulateur multi porteuses, par exemple OFDM, d'une chaîne classique de réception. Ce signal reçu "nettoyé" est typiquement injecté en entrée d'un égaliseur de canal.

En soustrayant du signal reçu, dans le domaine fréquentiel, uniquement la forme de référence la plus proche du bruit impulsif contenu dans le signal reçu, ceci permet de corriger plus efficacement le signal reçu comparativement à un effacement des échantillons temporels erronés. En conséquence, comparativement aux méthodes connues, cette méthode augmente la puissance du signal utile reçu sur chaque porteuse. La soustraction étant directement effectuée dans le domaine fréquentiel, elle ne nécessite pas de calcul particulier de transformée de Fourier. La complexité est donc fortement réduite et, par conséquent, le temps d'exécution des opérations de traitement et, par voie de conséquence, la consommation du récepteur.

Selon un mode de réalisation particulier, le procédé d'annulation de bruits impulsifs comprend en outre :

- une détermination de différentes formes de référence à partir d'enregistrements de différents bruits impulsifs détectés par un récepteur,
- une mémorisation de ces formes de référence,
- un calcul de l'amplitude et de la phase de ces différentes formes de référence, en fonction de la fréquence.

L'enregistrement de différents bruits impulsifs, la détermination de différentes formes de référence, la mémorisation et le calcul de la densité spectrale de puissance et de la phase peuvent être mises en oeuvre préalablement, de manière systématique ou occasionnelle, à la réception d'un signal de communication. Elles peuvent se dérouler lors d'une phase d'initialisation du dispositif récepteur ce qui permet d'optimiser le temps alloué à la communication et donc d'optimiser le débit de transmission. Elles peuvent tout aussi bien se dérouler à d'autres instants pour obtenir une mise à jour à ces instants des formes de référence.

Selon un mode de réalisation particulier, le procédé d'annulation de bruits impulsifs est tel que, si un bruit impulsif enregistré est répétitif alors une première forme de référence comprend n impulsions du bruit impulsif et une deuxième forme de référence comprend n+1 impulsions du bruit impulsif, avec n la partie entière du rapport entre la durée $T_s$ d'un symbole et l'inverse de la fréquence de répétition.

En enregistrant deux formes de référence avec un nombre d'impulsions fonction du rapport entre la durée d'un symbole et le temps séparant deux impulsions, le nombre d'impulsions étant différent de un entre les deux formes enregistrées, ceci permet avantageusement de prendre en compte un phénomène de gigue éventuel sur l'arrivée d'une impulsion par rapport aux symboles ou de prendre en compte un caractère pseudo périodique du bruit impulsif.

Selon un mode de réalisation particulier, le procédé d'annulation de bruits impulsifs est tel que :

- la forme de référence sélectionnée est celle dont les variations de phase, pour des porteuses réparties sur la bande Bn, sont les plus proches des variations de phases du signal reçu, dans le domaine fréquentiel, selon une comparaison de différences de facteur de pente entre les valeurs de phases respectives.

Selon ce mode de réalisation, le procédé estime pour certaines des porteuses de la bande Bn, des différences de phase entre le signal reçu et différentes formes de référence de bruits impulsifs. La forme de référence sélectionnée est celle dont les variations de phase sont les plus proches de celles du signal reçu selon une certaine mesure de différence de phase. Ainsi, la forme sélectionnée peut être celle pour laquelle la variance des différences par rapport à une moyenne ou une médiane est la plus faible.

Le choix d'une mesure de distance basée sur une comparaison de valeurs de phase a pour avantage de permettre une réutilisation d'une chaîne de réception classique en utilisant l'information directement disponible en sortie d'un démodulateur multi porteuses, par exemple OFDM qui utilise classiquement une transformée de Fourier.

Selon un mode de réalisation particulier, le procédé d'annulation de bruits impulsifs est tel que la sélection d'une forme de référence selon une comparaison de différences de facteur de pente entre les valeurs de phases respectives comprend :

- une détermination d'un premier facteur de pente de phase $\Delta\varphi_{per}(f)$ entre porteuses de la bande Bn séparées de n écarts interporteuses, en faisant la soustraction entre les valeurs de phase associées du signal reçu dans le domaine fréquentiel et en divisant la différence par n,
- une détermination d'un second facteur de pente de phase $\Delta\varphi_{ref}(f)$ entre porteuses de la bande Bn séparées de m écarts interporteuses, en faisant la soustraction entre les valeurs de phase associées d'une forme de référence et en divisant la différence par m, par forme de référence et par porteuse f,
- une comparaison du premier facteur de pente avec le second facteur de pente en faisant la soustraction entre les deux facteurs de pente,
- un calcul de la valeur d'une métrique des différentes valeurs obtenues après comparaison,
- un calcul de la variance entre la valeur de la métrique et les valeurs obtenues après comparaison pour les différentes porteuses, par forme de référence,
- une sélection de la forme de référence pour laquelle la variance est la plus petite.

Selon un mode de réalisation particulier, le procédé d'annulation de bruits impulsifs est tel que la sélection d'une forme de référence selon une comparaison de différences de facteur de pente entre les valeurs de phases respectives comprend :

- une détermination d'un premier facteur de pente de phase $\Delta\varphi_{per}(f)$ entre porteuses successives de la bande Bn, en faisant la soustraction entre deux valeurs de phase successives du signal reçu dans le domaine fréquentiel,
- une détermination d'un second facteur de pente de phase $\Delta\varphi_{ref}(f)$ entre porteuses successives de la bande Bn, en faisant la soustraction entre deux valeurs de phase successives d'une forme de référence, par forme de référence et par porteuse f,
- une comparaison du premier facteur de pente avec le second facteur de pente en faisant la soustraction entre les deux facteurs de pente,
- un calcul de la valeur d'une métrique des différentes valeurs obtenues après comparaison,
- un calcul de la variance entre la valeur de la métrique et les valeurs obtenues après comparaison pour les différentes porteuses, par forme de référence,
- une sélection de la forme de référence pour laquelle la variance est la plus petite.

Les calculs de facteurs de pente et les comparaisons font uniquement intervenir des opérations de soustraction de réels dont l'implémentation est très simple comparativement à un calcul de transformée de Fourier qui nécessite des multiplications et des additions complexes.

Selon un mode de réalisation particulier, le procédé d'annulation de bruits impulsifs est tel que la métrique est une moyenne.

Le choix de la moyenne est avantageux pour un ensemble de valeurs homogènes sans grande disparité.

Selon un mode de réalisation particulier, le procédé d'annulation de bruits impulsifs est tel que la métrique est une médiane.

Le choix de la médiane est avantageux pour atténuer l'effet de valeurs isolées de fortes amplitudes.

Selon un mode de réalisation particulier, le procédé d'annulation de bruits impulsifs, comprend en outre une estimation d'un déphasage entre la forme de référence sélectionnée et les valeurs de phases du signal dans le domaine fréquentiel, pour une porteuse f de la bande B, en multipliant la valeur $\Delta\alpha$ de la métrique avec la durée d'un symbole $T_S$ et avec la fréquence considérée f.

Le bruit impulsif qui perturbe le signal reçu peut être décalé en temps par rapport à la forme de référence enregistrée. Le déphasage estimé à partir de la valeur de la métrique a pour avantage d'être simple. En outre, le déphasage estimé étant proportionnel à la fréquence, le décalage de la forme de référence est effectué de manière simple en multipliant la métrique par la durée d'un symbole $T_s$ et la fréquence considérée f.

L'invention a en outre pour objet un procédé d'émission d'un signal multi porteuse mis en oeuvre par un système de communication utilisant un canal de propagation filaire, dans lequel des porteuses d'une bande Bn sont mises à zéro avant l'émission, en fonction d'un masque de fréquence déterminé en fonction de formes de référence de bruits impulsifs.

En transmission radio, il est fréquent de fixer des porteuses à zéro. La prise en compte de la densité spectrale de puissance des bruits impulsifs, qui peuvent perturber le signal reçu, lors de la détermination de l'emplacement de ces porteuses dans la bande de transmission B permet avantageusement d'améliorer l'efficacité de l'annulation de ces bruits, dans le signal reçu.

L'invention a en outre pour objet un système comprenant un récepteur adapté selon l'invention.

Les différents modes de réalisation précédents peuvent être combinés ou pas avec un ou plusieurs de ces modes pour définir un autre mode de réalisation.

Selon une implémentation préférée, les étapes du procédé de réception, sont déterminées par les instructions d'un programme de réception incorporé dans un circuit électronique telle une puce elle-même pouvant être disposée dans un dispositif électronique tel un récepteur. Le procédé de réception, selon l'invention peut tout aussi bien être mis en oeuvre lorsque ce programme est chargé dans un organe de calcul tel un processeur ou équivalent dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

D'autres caractéristiques et avantages de l'invention apparaîtront lors de la description qui suit faite en regard de figures annexées données à titre d'exemples non limitatifs.

La figure 1 est la représentation graphique d'une chaîne de réception selon l'art antérieur.

La figure 2 est un organigramme d'un procédé selon l'invention.

La figure 3 est la représentation graphique d'une chaîne de réception d'un récepteur adapté selon l'invention.

La figure 4 est la représentation graphique d'un système selon l'invention.

Un module représenté sur différentes figures avec une même référence assure la même fonction.

La figure 2 représente un organigramme d'un procédé 1 d'annulation de bruits impulsifs selon l'invention, dans un signal de communication reçu par un récepteur de télécommunication. Le signal de communication reçu sr(t) est de type multiporteuses réparties sur une bande B. Le signal multiporteuses est typiquement un signal OFDM. La bande B comprend une bande Bn sur laquelle aucune donnée utile n'est émise. Le signal reçu provient de l'émission d'un signal typiquement OFDM. Le canal de transmission est soumis à des bruits impulsifs. Le signal reçu contient typiquement une ou plusieurs impulsions de bruit. Le procédé selon l'invention annule les impulsions de bruit contenues dans le signal reçu.

Le signal de communication reçu sr(t) est classiquement échantillonné au moyen d'un convertisseur analogique numérique CAN.

Le signal reçu échantillonné Sr(t) est classiquement transformé 2 du domaine temporel au domaine fréquentiel, typiquement en mettant en oeuvre une transformée de Fourier. Le signal transformé est caractérisé par une amplitude et une phase fonctions de la fréquence, A(f) et $\varphi$(f). La transformation est classiquement effectuée sur un nombre d'échantillons du signal reçu qui correspond à la taille de la FFT et qui correspond à la taille d'un symbole dont la durée est notée $T_S$.

Le procédé effectue une sélection 3 d'une forme de référence parmi différentes formes de référence de bruits impulsifs. Cette sélection est effectuée selon une mesure de distance entre le signal reçu et une forme de référence et est effectuée sur une bande Bn. La bande Bn est incluse dans la bande B. Elle est généralement constituée de sous bandes disjointes sur lesquelles aucune donnée utile n'a été émise.

Le procédé effectue une soustraction de la forme de référence sélectionnée du signal reçu. La soustraction est effectuée dans le domaine fréquentiel, sur la bande B. La forme de référence sélectionnée est corrigée avant soustraction, d'un décalage temporel estimé entre cette forme de référence et le signal reçu.

Selon un mode de réalisation, la forme de référence sélectionnée est celle dont les variations de phase, pour des porteuses réparties sur la bande Bn, sont les plus proches des variations de phases du signal reçu, dans le domaine fréquentiel, selon une comparaison de différences de facteur de pente entre les valeurs de phases respectives.

Selon un autre mode de réalisation, la forme de référence sélectionnée est celle dont les variations d'amplitude sont les plus proches des variations d'amplitude du signal reçu, dans le domaine fréquentiel. A cette fin, le procédé calcule, pour chaque forme de référence, et sur l'ensemble des fréquences de la bande Bn, la variance du rapport entre l'amplitudes du signal reçu et l'amplitude de la forme de référence, et sélectionne la forme d'onde correspondant à la variance la plus faible. Une fois la forme d'onde sélectionnée, l'estimation du décalage temporel utilise une comparaison des variations de phase entre la forme d'onde sélectionnée et le signal reçu.

Le procédé peut comprendre d'autres actions en fonction des modes de réalisation.

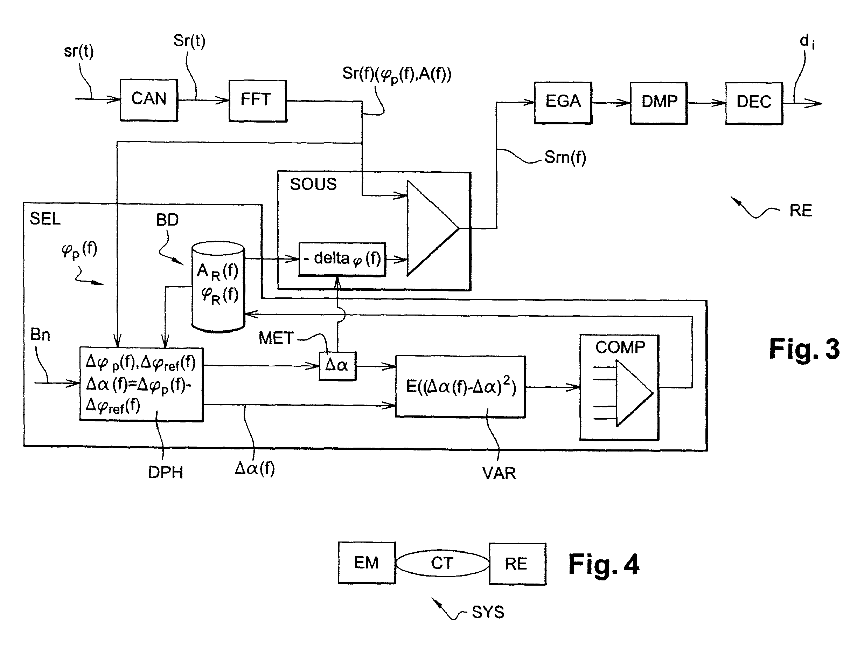

La figure 3 est une représentation graphique d'un exemple de réalisation d'un récepteur adapté selon l'invention. La figure 3 représente schématiquement la chaîne de réception du récepteur RE.

Les modules de même référence que ceux de la figure 1 de l'art antérieur ne sont pas redécrits car ils sont identiques dans leur fonction.

La chaîne de réception comprend en outre :

- un module de sélection SEL pour sélectionner 3 une forme de référence parmi différentes formes de référence de bruits impulsifs, selon une mesure de distance avec le signal reçu effectuée sur une bande Bn, et
- un module de soustraction SOUS pour soustraire 4 la forme de référence sélectionnée du signal reçu. La soustraction est effectuée dans le domaine fréquentiel, sur la bande B. La forme de référence sélectionnée est corrigée avant soustraction d'un décalage temporel estimé entre cette forme de référence et le signal reçu.

Le module de sélection SEL comprend une base de données BD, un module de calcul de différences de phases DPH, un module de calcul d'une métrique MET, un module de calcul de variance, un module de comparaison COMP.

La base de données BD peut consister en tout composant mémoire non volatile. Différentes formes de référence correspondant à différents bruits impulsifs y sont mémorisées sous la forme d'une amplitude et d'une phase dépendants de la fréquence, A(f), $\varphi$(f).

Les différents modules de calcul peuvent être des modules logiciels mis en oeuvre par un organe de calcul tel un processeur ou équivalent ou peuvent être des composants matériels spécialement configurés tels des FPGA ou équivalents. Les différents modules de calcul peuvent être regroupés dans un seul composant matériel spécialement configuré.

Le module de calcul de variations de phases DPH effectue une détermination d'un premier facteur de pente de phase $\Delta\varphi_p$(f) du signal reçu. La détermination est effectuée entre porteuses successives de la bande Bn, en calculant la variation entre deux valeurs de phase successives dans le domaine fréquentiel selon la relation suivante :

$$\Delta\varphi_p\left(f\right) = \varphi_p\left(f + \Delta f\right) - \varphi_p\left(f\right)$$

avec $\Delta$f l'écart inter porteuses.

La détermination peut alternativement être effectuée entre porteuses non successives séparées de n $\Delta$f. La différence de phase est dans ce cas divisée par n pour obtenir $\Delta\varphi_p$(f).

Le module de calcul de variations de phases DPH effectue en outre une détermination d'un second facteur de pente de phase $\Delta\varphi_{ref}$(f) d'une forme de référence mémorisée dans la base de données BD. La détermination est effectuée entre porteuses successives de la bande Bn, en calculant la variation entre deux valeurs de phase successives dans le domaine fréquentiel selon la relation suivante :

$$\Delta\varphi_{ref}\left(f\right) = \varphi_{ref}\left(f + \Delta f\right) - \varphi_{ref}\left(f\right).$$

La détermination peut alternativement être effectuée entre porteuses non successives séparées de n Δf. La différence de phase est dans ce cas divisée par n pour obtenir $\Delta\varphi_{ref}(f)$.

Cette détermination peut être effectuée pour différentes formes de référence mémorisées.

Le module de calcul de variations de phases DPH effectue en outre une comparaison du premier facteur de pente avec le second facteur de pente. Cette comparaison est effectuée en faisant la soustraction entre les deux facteurs de pente, dans le domaine fréquentiel, selon la relation suivante :

$$\Delta\alpha\left(f\right) = \Delta\varphi_{per}\left(f\right) - \Delta\varphi_{ref}\left(f\right) = 2\pi delta_t / T_S$$

La comparaison est effectuée par porteuse f, et par forme de référence.

Le module de calcul d'une métrique MET calcule la valeur Δα d'une métrique représentative des différentes valeurs Δα(f) obtenues après comparaison. Cette métrique est typiquement une médiane ou une moyenne.

Le module de calcul de variance calcule la variance entre la valeur Δα de la métrique et les valeurs Δα(f) obtenues après comparaison pour les différentes porteuses. Le calcul de variance est fait pour une forme de référence. Il est répété pour les différentes formes de référence.

Le module de comparaison COMP détermine la variance la plus petite entre les différentes variances calculées et sélectionne la forme de référence correspondante mémorisée dans la base de données.

Le module de soustraction SOUS estime un déphasage $delta_\varphi(f)$ entre la forme de référence sélectionnée et les valeurs de phases du signal dans le domaine fréquentiel, par porteuse f de la bande B, en multipliant la valeur Δα de la métrique avec la durée d'un symbole $T_S$ et la fréquence considérée, $f$, selon la relation suivante :

$$delta_\varphi\left(f\right) = \left(\Delta\alpha \times T_s \times f\right).$$

Le module de soustraction SOUS corrige la phase de la forme de référence sélectionnée de la valeur du déphasage $delta_\varphi(f)$, ce qui revient à corriger le décalage temporel entre la forme de référence sélectionnée et le signal reçu.

Le module de soustraction SOUS soustrait la forme de référence déphasasée $delta_\varphi(f)$ dans le domaine fréquentiel en effectuant typiquement la soustraction complexe entre le signal reçu $A(f)\exp(i\varphi(f))$ et le signal de la forme de référence $A_R(f)\exp(i\cdot\varphi_R(f))$, corrigé par la valeur du déphasage $delta_\varphi(f)$, par porteuse f, suivant la relation :

$$A(f)\exp(i\cdot\varphi(f)) - A_R(f)\exp(i\cdot(\varphi_R(f) + delta_\varphi(f))).$$

La figure 4 est la représentation graphique d'un système selon l'invention. Le système SYS comprend un émetteur et un récepteur adapté RE selon l'invention. L'émetteur et le récepteur sont séparés par un canal de transmission CT.

**Revendications**

1. Procédé (1) d'annulation de bruits impulsifs détectés dans un signal multi porteuse de communication reçu par un récepteur (ER$_B$), les porteuses étant réparties sur une bande B dont une sous bande Bn ne contient pas de données utiles, qui comprend :

  - une transformation (2) du signal reçu échantillonné, du domaine temporel au domaine fréquentiel, en amplitude et en phase sur la bande B, par paquet d'échantillons de durée T$_s$ formant un symbole,
  - une sélection (3) d'une forme de référence parmi différentes formes de référence de bruits impulsifs selon une mesure de distance avec le signal reçu effectuée sur une bande Bn,
- une soustraction (4) dans le domaine fréquentiel, sur la bande B, de la forme de référence sélectionnée, corrigée d'un décalage temporel estimé entre la forme de référence sélectionnée et le signal reçu, du signal reçu,.

2. Procédé (1) d'annulation de bruits impulsifs selon la revendication 1, comprenant en outre :

- une détermination de différentes formes de référence à partir d'enregistrements de différents bruits impulsifs détectés par un récepteur,
- une mémorisation de ces formes de référence,
- un calcul de l'amplitude et de la phase de ces différentes formes de référence, en fonction de la fréquence.

3. Procédé (1) d'annulation de bruits impulsifs selon la revendication 2 dans lequel, si un bruit impulsif enregistré est répétitif alors une première forme de référence comprend n impulsions du bruit impulsif et une deuxième forme de référence comprend n+1 impulsions du bruit impulsif, avec n la partie entière du rapport entre la durée $T_s$ d'un symbole et l'inverse de la fréquence de répétition.

4. Procédé (1) d'annulation de bruits impulsifs selon la revendication 1, dans lequel :

- la forme de référence sélectionnée est celle dont les variations de phase, pour des porteuses réparties sur la bande Bn, sont les plus proches des variations de phases du signal reçu, dans le domaine fréquentiel, selon une comparaison de différences de facteur de pente entre les valeurs de phases respectives.

5. Procédé (1) d'annulation de bruits impulsifs selon la revendication 4, dans lequel la sélection d'une forme de référence selon une comparaison de différences de facteur de pente entre les valeurs de phases respectives comprend :

- une détermination d'un premier facteur de pente entre porteuses successives de la bande Bn, en faisant la soustraction entre deux valeurs de phase successives du signal reçu dans le domaine fréquentiel,
- une détermination d'un second facteur de pente entre porteuses successives de la bande Bn, en faisant la soustraction entre deux valeurs de phase successives d'une forme de référence,
- par forme de référence et par porteuse f, une comparaison du premier facteur de pente avec le second facteur de pente en faisant la soustraction entre les deux facteurs de pente,
- un calcul de la valeur $\Delta\alpha$ d'une métrique des différentes valeurs $\Delta\alpha(f)$ obtenues après comparaison,
- un calcul de la variance entre la valeur $\Delta\alpha$ de la métrique et les valeurs $\Delta\alpha(f)$ obtenues après comparaison pour les différentes porteuses, par forme de référence,
- une sélection de la forme de référence pour laquelle la variance est la plus petite.

6. Procédé (1) d'annulation de bruits impulsifs selon la revendication 5 dans lequel la métrique est une moyenne.

7. Procédé (1) d'annulation de bruits impulsifs selon la revendication 5 dans lequel la métrique est une médiane.

8. Procédé (1) d'annulation de bruits impulsifs selon la revendication 5, comprenant en outre une estimation d'un déphasage $delta_\varphi(f)$ entre la forme de référence sélectionnée et les valeurs de phases du signal dans le domaine fréquentiel, pour une porteuse f de la bande B, en multipliant la valeur $\Delta\alpha$ de la métrique avec la durée d'un symbole $T_s$ et la fréquence considérée f.

9. Récepteur (RE) d'un signal multi porteuse, les porteuses étant réparties sur une bande B dont une sous bande Bn ne contient pas de données utiles, le signal émis étant transmis par un canal de transmission séparant un émetteur du récepteur, comprenant :

- un module de transformation (FFT) du signal reçu dans le domaine fréquentiel, en amplitude et en phase sur la bande B, par paquet d'échantillons de durée $T_s$ formant un symbole, et adapté en ce qu'il comprend :
- un module de sélection (SEL) d'une forme de référence parmi différentes formes de référence de bruits impulsifs, selon une mesure de distance avec le signal reçu effectuée sur une bande Bn,
- un module de soustraction (SOUS) dans le domaine fréquentiel, sur la bande B, de la forme de référence sélectionnée, corrigée d'un décalage temporel estimé entre la forme de référence sélectionnée et le signal reçu, du signal reçu.

10. Système de télécommunication (SYS) comprenant un dispositif récepteur (RE) selon la revendication 9.

**Fig. 1**

**Fig. 2**

Fig. 3

Fig. 4

EP 2 175 599 A1

Europäisches Patentamt
European Patent Office
Office européen des brevets

**RAPPORT DE RECHERCHE EUROPEENNE**

Numéro de la demande

EP 09 17 2717

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (IPC) |
| A | EP 1 361 720 A (SONY UK LTD [GB]) 12 novembre 2003 (2003-11-12) * abrégé * * alinéas [0004] - [0010] * * alinéas [0014] - [0025] * * alinéas [0029] - [0061] * * figures 2a,b * * figure 4b * * figure 5 * | 1-10 | INV. H04L27/26 |
| A | US 2006/193390 A1 (SEDARAT HOSSEIN [US]) 31 août 2006 (2006-08-31) * abrégé * * alinéas [0002], [0003], [0008] * * alinéa [0019] * * alinéas [0029] - [0060] * * figures 4,5,6a,6b * | 1-10 | |
| A | ZHIDKOV S V: "IMPULSIVE NOISE SUPPRESSION IN OFDM BASED COMMUNICATION SYSTEMS" IEEE TRANSACTIONS ON CONSUMER ELECTRONICS, IEEE SERVICE CENTER, NEW YORK, NY, US, vol. 49, no. 4, 1 novembre 2003 (2003-11-01), pages 944-948, XP001201226 ISSN: 0098-3063 * abrégé * Chapitres I-III | 1-10 | DOMAINES TECHNIQUES RECHERCHES (IPC) H04L |

-/--

Le présent rapport a été établi pour toutes les revendications

| Lieu de la recherche | Date d'achèvement de la recherche | Examinateur |
|---|---|---|
| La Haye | 28 octobre 2009 | Dhibi, Youssef |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 09 17 2717

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | ROUISSI F ET AL: "Adaptive technique for impulsive noise cancellation in broad-band power line communication system" PROCEEDINGS OF THE FOURTH IEEE INTERNATIONAL SYMPOSIUM ON SIGNAL PROCESSING AND INFORMATION TECHNOLOGY, 2004, 18 décembre 2004 (2004-12-18), - 21 décembre 2004 (2004-12-21) pages 413-416, XP010800540 NJ, USA ISBN: 978-0-7803-8689-1 * abrégé * Chapitres I-III * figures 2,3 * ----- | 1-10 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 28 octobre 2009 | Dhibi, Youssef |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 17 2717

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-10-2009

| Document brevet cité au rapport de recherche | | Date de publication | Membre(s) de la famille de brevet(s) | | Date de publication |
|---|---|---|---|---|---|
| EP 1361720 | A | 12-11-2003 | GB | 2388500 A | 12-11-2003 |
| US 2006193390 | A1 | 31-08-2006 | AUCUN | | |

EPO FORM P0460

Pour tout renseignement concernant cette annexe : voir Journal Officiel de l'Office européen des brevets, No.12/82